# EUROPEAN PATENT SPECIFICATION

(11) **EP 4 212 398 B1**
(45) Date of publication and mention of the grant of the patent: **24.04.2024**
(21) Application number: 22151637.0
(22) Date of filing: 14.01.2022
(51) Int. Cl.: B60S 1/38

(54) **WIPER ASSEMBLING STRUCTURE**
WISCHERMONTAGESTRUKTUR
STRUCTURE D'ASSEMBLAGE D'ESSUIE-GLACE

(43) Date of publication of application: 19.07.2023
(73) Proprietor: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW)
(74) Representative: 2K Patentanwälte Blasberg Kewitz & Reichel

(56) References cited:
- WO-A2-2013/042996
- DE-A1- 10 349 637
- US-A1- 2015 266 453
- US-A1- 2022 001 840

## Description

### BACKGROUND

### Technical Field

The disclosure relates to a windshield wiper structure, particularly to an assembling structure of a windshield wiper.

### Related Art

A car wiper is disposed outside the glass and connected to a wiper driving arm. The wiper is driven by the driving arm to swing over the glass to remove rain, snow, and/or dirt.

Also, a wiper structure generally includes an accessory seat, a fixing seat, and a protective cover. The bottom of the accessory seat is connected with a rubber blade. The fixing seat is connected on the accessory seat. The protective cover is installed atop the fixing seat. As a result, the wiper driving arm is fixed to the accessory seat to drive the accessory and press the blade so as to accomplish the function of cleaning glass.

US 2022/001840 A1 discloses a wiper assembling structure connected with a driving arm, the wiper assembling structure comprising: a fixing seat, comprising a shell seat and multiple pressing blocks disposed in the shell seat; an accessory seat, comprising a bottom plate and two side plates perpendicularly extended from the bottom plate, each of two ends of each side plates comprising multiple protrusive sheets respectively disposed on an end thereof, and the accessory seat positioned in the fixing seat by inserting the protrusive sheets into the shell seat to be pressed by the pressing blocks; and a blade set, comprising an elastic sheet and at least one rubber strip, the elastic sheet disposed under the bottom plate, and the rubber strip connected with the elastic sheet and extended on one side of the accessory seat; wherein the shell seat comprises a receiving trough disposed corresponding to the two side plates of the accessory seat, and the pressing blocks are disposed on corners of the receiving trough of the shell seat.

Furthermore, the protective cover of the abovementioned wiper structure is connected to the accessory seat by a pivot or a rotary engagement.

In view of this, the inventors have devoted themselves to the above-mentioned prior art, researched intensively and cooperated with the application of science to try to solve the above-mentioned problems. Finally, the invention which is reasonable and effective to overcome the above drawbacks is provided.

### SUMMARY

The disclosure provides a wiper assembling structure, which may simplify assembling of a wiper structure and stabilize the connection between the fixing seat and the accessory seat.

To accomplish the above object, the the shell seat comprises multiple support sheets disposed on a bottom of the receiving trough, and two ends of the bottom plate abut against the support sheets.

In comparison with the related art, the wiper assembling structure of the disclosure is disposed with multiple pressing blocks on the fixing seat and formed with multiple protrusive sheets on the ends of the side plates of the accessory seat, so that the accessory seat is assembled in the fixing seat by inserting the protrusive sheets into the shell seat to be pressed by the pressing blocks, and the accessory seat is not easily being separate from the fixing seat due to the interference fit to accomplish the object of firm connection. In addition, the shell seat is formed with multiple fastening sheets on a periphery of the fixing seat, the two side plates are disposed with multiple fastening holes corresponding to positions of the fastening sheets so that the fastening sheets are engaged with the fastening holes to accomplish the objects of simplification of the wiper structure and firm connection.

### BRIEF DESCRIPTION OF THE DRAWINGS

FIG. 1 is a perspective schematic view of the wiper assembling structure of the disclosure;
FIG. 2 is an exploded view of the wiper assembling structure of the disclosure;
FIG. 3 is an exploded view of the fixing seat and the accessory seat of the disclosure;
FIG. 4 is a perspective schematic view of the wiper assembling structure of the disclosure after removing the protective cover; and
FIGS. 5 and 6 are assembled cross-sectional views of the wiper assembling structure of the disclosure after removing the protective cover.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

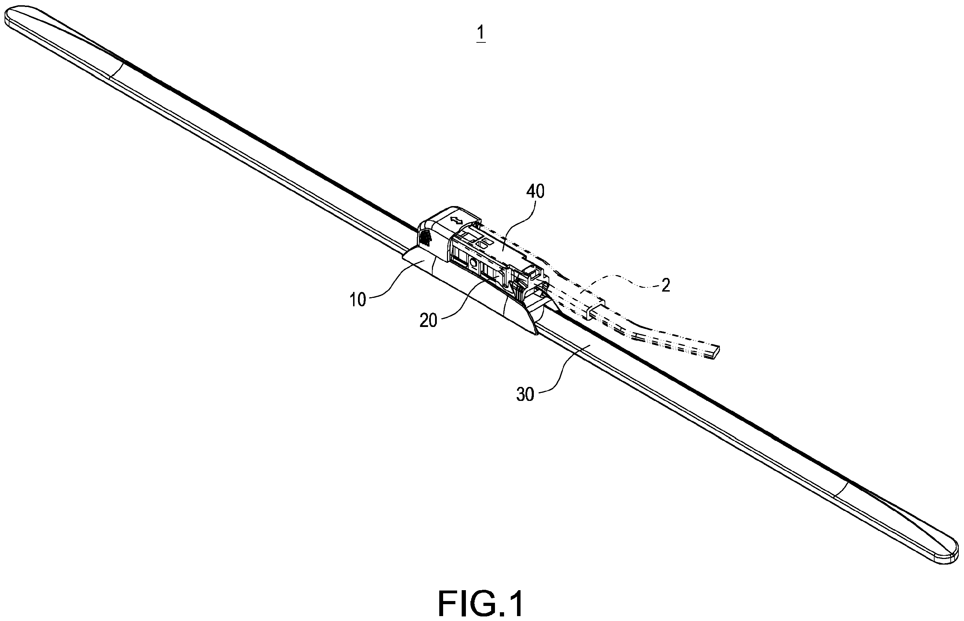

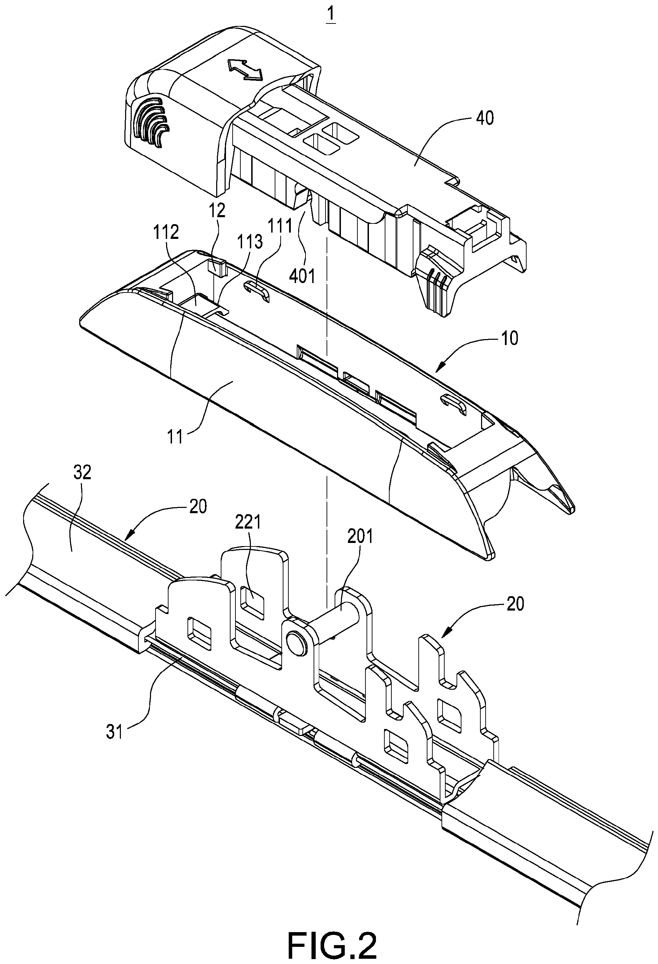

Please refer to FIGS. 1 and 2, which are a perspective schematic view and an exploded view of the wiper assembling structure of the disclosure. The disclosure provides a wiper assembling structure 1 to be connected with a driving arm 2. The wiper assembling structure 1 includes a fixing seat 10, an accessory seat 20, a blade set 30 and a protective cover 40. The accessory seat 20 is connected in the fixing seat 10 by means of interference fit. The blade set 30 is connected on the bottom of the accessory seat 20. In the embodiment, the accessory seat 20 is disposed with a pivot 201. Also, the protective cover 40 is disposed with a through hole 401. The protective cover 40 is connected to the accessory seat 20 by passing the pivot 201 through the through hole 401 so as to complete the wiper assembling structure 1. More details will be described below.

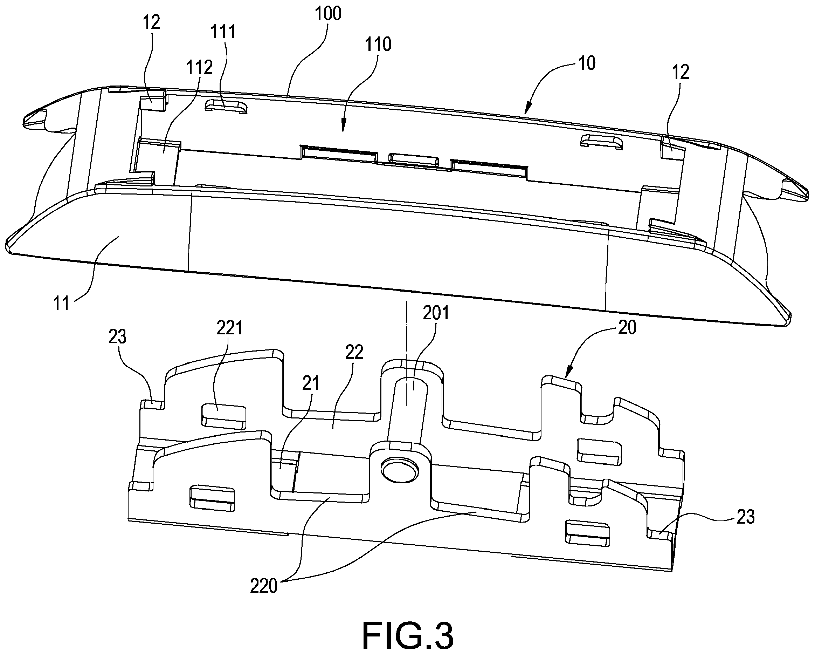

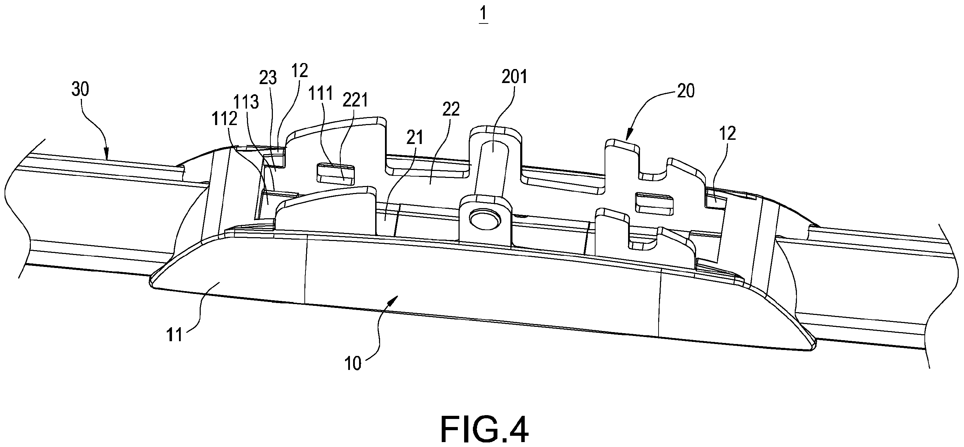

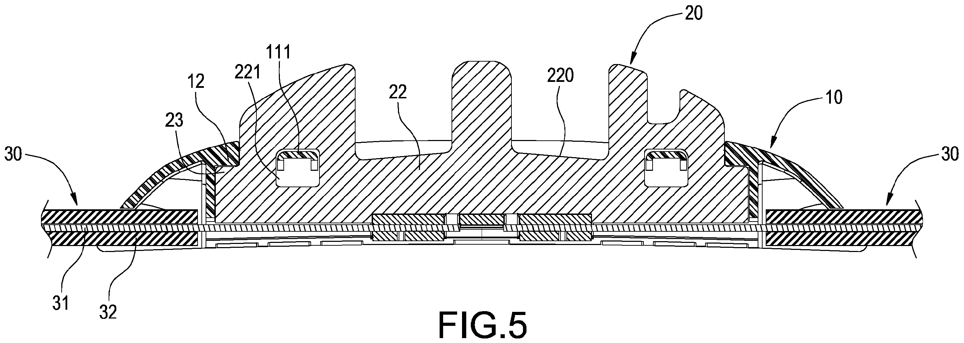

Please refer to FIGS. 3-6, which are an exploded view of the fixing seat and the accessory seat, a perspective schematic view of the wiper assembling structure after removing the protective cover and two assembled cross-sectional views of the wiper assembling structure of the disclosure after removing the protective cover. In an embodiment of the disclosure, the fixing seat 10 includes a shell seat 11 and multiple pressing blocks 12 disposed in the shell seat 11. The accessory seat 20 includes a bottom plate 21 and two side plates 22 perpendicularly extended from the bottom plate 21. Each of two ends of each side plate is formed with multiple protrusive sheets 23. The accessory seat 20 is positioned in the fixing seat 10 by inserting the protrusive sheets 23 into the shell seat 11 to be pressed by the pressing blocks 12.

Further, the blade set 30 includes an elastic sheet 31 and a rubber strip 32. The elastic sheet 31 is disposed under the bottom plate 21. The rubber strip 32 is connected with the elastic sheet 31 and extended on one side of the accessory seat 20. In some embodiments, the blade set 30 includes two rubber strips 32 extended oppositely on two sides of the accessory seat 20.

In detail, the shell seat 11 has an opening 100. The shell seat 11 is formed with a receiving trough 110 at the position of the opening 100 and corresponding to the two side plates 22 of the accessory seat 20. The shell seat 11 is formed with the pressing blocks 12 at corners of the receiving trough 110 (the opening 100). In addition, the accessory seat 20 includes the pivot 201 disposed between the two side plates 22. Each of the two side plates 22 is disposed with two indents 220 at two sides of the pivot 201. The indent 220 may be used for connecting with different driving arms 2 to increase utility.

In some embodiments, the shell seat 11 is formed with multiple fastening sheets 111 on a periphery of the receiving trough 110. The fastening sheets 111 are adjacent to the opening 100. In addition, the two side plates 22 are disposed with multiple fastening holes 221 corresponding to positions of the fastening sheets 111. The fastening sheets 111 are engaged with the fastening holes 221 to make the accessory seat 20 be connected in the fixing seat 10 more firmly.

In detail, the shell seat 11 is formed with multiple support sheets 112 on the bottom of the receiving trough 110. Also, two ends of the bottom plate 21 abut against the support sheets 112. In addition, the support sheets 112 are disposed separately corresponding to the pressing blocks 12 in position. The protrusive sheets 23 are inserted between the support sheets 112 and the pressing blocks 12 as shown in FIG. 3, respectively.

In an embodiment of the disclosure, the shell seat 11 is disposed with a groove 113 on two sides of each support sheet 112 as shown in FIG. 2. Each protrusive sheet 23 is inserted between the groove 113 and the pressing block 12 as shown in FIGS. 2 and 3.

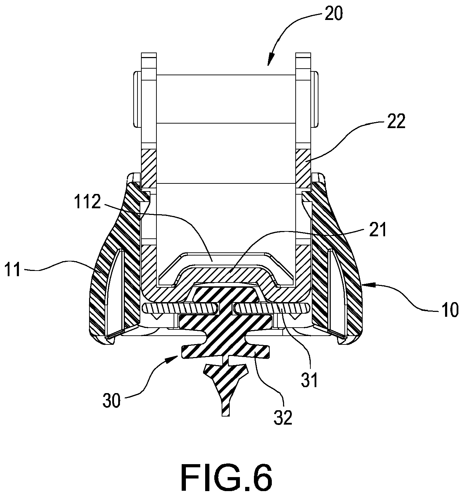

It is noted that a cross-section of the bottom plate 21 is corresponding to a cross-section of the support sheet 112 to be a U-shape as shown in FIG. 6. Thus, the bottom plate 21 and the support sheet 112 may indeed abut against each other to make the both connect more firmly.

It is also noted that when the accessory seat 20 of the disclosure is being assembled in the fixing seat 10, the protrusive sheet 23 on a side of the accessory seat 20 is placed in the pressing block 12 on one side of the shell seat 11 first to be placed in the receiving trough 112, and then the protrusive sheet 23 on the other side of the accessory seat 20 is pressed to be under the pressing block 12 on the other side. As a result, the accessory seat 20 is assembled in the fixing seat 10 by means of interference fit to make the accessory seat 20 be unable to be separated from the fixing seat 10.

## Claims

1. A wiper assembling structure (1) connectable with a driving arm (2), the wiper assembling structure (1) comprising:
a fixing seat (10), comprising a shell seat (11) and multiple pressing blocks (12) disposed in the shell seat (11);
an accessory seat (20), comprising a bottom plate (21) and two side plates (22) perpendicularly extended from the bottom plate (21), each of two ends of each side plates (22) comprising multiple protrusive sheets (23) respectively disposed on an end thereof, and the accessory seat (20) positioned in the fixing seat (10) by inserting the protrusive sheets (23) into the shell seat (11) to be pressed by the pressing blocks (12); and
a blade set (30), comprising an elastic sheet (31) and at least one rubber strip (32), the elastic sheet (31) disposed under the bottom plate (21), and the rubber strip (32) connected with the elastic sheet (31) and extended on one side of the accessory seat (20);
wherein the shell seat (11) comprises a receiving trough (110) disposed corresponding to the two side plates (22) of the accessory seat (20), and the pressing blocks (12) are disposed on corners of the receiving trough (110) of the shell seat (11);
**characterized in that** the shell seat (11) comprises multiple support sheets (112) disposed on a bottom of the receiving trough (110), and two ends of the bottom plate (21) abut against the support sheets (112).

2. The wiper assembling structure of claim 1, wherein the shell seat (11) comprises multiple fastening sheets (111) disposed on a periphery of the receiving trough (110), the two side plates (22) comprises multiple fastening holes (221) disposed corresponding to the fastening sheets (111), and the fastening sheets (111) are engaged with the fastening holes (221).

3. The wiper assembling structure of claim 1, wherein the support sheets (112) are separately disposed corresponding to the pressing blocks (12) in position, and the protrusive sheets (23) are inserted between the support sheets (112) and the pressing blocks (12), respectively.

4. The wiper assembling structure of claim 3, wherein the shell seat (11) comprises a groove (113) disposed on two sides of each support sheet (112), and each protrusive sheet (23) is inserted between the groove (113) and the pressing block (12).

5. The wiper assembling structure of claim 4, wherein a cross-section of the bottom plate (21) is configured corresponding to a cross-section of the support sheet (112), and the cross-section of the bottom plate (21) is a U-shape.

6. The wiper assembling structure of claim 1, wherein the accessory seat (20) further comprises a pivot (201) disposed between the two side plates (22), and each of the two side plates (22) comprises two indents (22) disposed on two sides of the pivot (201).

7. The wiper assembling structure of claim 6, further comprising a protective cover (40), wherein the protective cover (40) comprises a through hole (401), and the protective cover (40) is connected to the accessory seat (20) by passing the pivot (201) through the through hole (401).

## Patentansprüche

1. Wischermontagestruktur (1), die mit einem Antriebsarm (2) verbindbar ist, wobei die Wischermontagestruktur (1) umfasst:
einen Befestigungssitz (10), der einen Schalensitz (11) und mehrere in dem Schalensitz (11) angeordnete Pressblöcke (12) umfasst;
einen Zubehörsitz (20), der eine Bodenplatte (21) und zwei Seitenplatten (22) umfasst, die sich senkrecht von der Bodenplatte (21) aus erstrecken, wobei jedes der beiden Enden jeder Seitenplatte (22) mehrere vorstehende Blätter (23) umfasst, die jeweils an einem Ende davon angeordnet sind, und wobei der Zubehörsitz (20) in dem Befestigungssitz (10) positioniert wird, indem die vorstehenden Blätter (23) in den Schalensitz (11) eingeführt werden, um durch die Pressblöcke (12) gepresst zu werden; und
einen Messersatz (30), der eine elastische Folie (31) und mindestens einen Gummistreifen (32) umfasst, wobei die elastische Folie (31) unter der Bodenplatte (21) angeordnet ist und der Gummistreifen (32) mit der elastischen Folie (31) verbunden ist und sich auf einer Seite des Zubehörsitzes (20) erstreckt;
wobei der Schalensitz (11) eine Aufnahmemulde (110) aufweist, die entsprechend den beiden Seitenplatten (22) des Zubehörsitzes (20) angeordnet ist, und die Pressblöcke (12) an Ecken der Aufnahmemulde (110) des Schalensitzes (11) angeordnet sind;
**dadurch gekennzeichnet, dass** der Schalensitz (11) mehrere Stützbleche (112) umfasst, die auf einem Boden der Aufnahmemulde (110) angeordnet sind, und dass zwei Enden der Bodenplatte (21) an den Stützblechen (112) anliegen.

2. Wischermontagestruktur nach Anspruch 1, wobei der Schalensitz (11) mehrere Befestigungsblätter (111) umfasst, die an einem Umfang der Aufnahmemulde (110) angeordnet sind, die beiden Seitenplatten (22) mehrere Befestigungslöcher (221) umfassen, die entsprechend den Befestigungsblättern (111) angeordnet sind, und die Befestigungsblätter (111) mit den Befestigungslöchern (221) in Eingriff stehen.

3. Wischermontagestruktur nach Anspruch 1, wobei die Stützblätter (112) separat entsprechend der Position der Pressblöcke (12) angeordnet sind und die vorstehenden Blätter (23) jeweils zwischen den Stützblättern (112) und den Pressblöcken (12) eingesetzt sind.

4. Wischermontagestruktur nach Anspruch 3, wobei der Schalensitz (11) eine Nut (113) umfasst, die auf zwei Seiten jedes Stützblechs (112) angeordnet ist, und jedes vorstehende Blech (23) zwischen die Nut (113) und den Pressblock (12) eingesetzt ist.

5. Wischermontagestruktur nach Anspruch 4, wobei ein Querschnitt der Bodenplatte (21) entsprechend einem Querschnitt der Trägerplatte (112) konfiguriert ist und der Querschnitt der Bodenplatte (21) eine U-Form ist.

6. Wischermontagestruktur nach Anspruch 1, wobei der Zubehörsitz (20) ferner einen Drehzapfen (201) umfasst, der zwischen den beiden Seitenplatten (22) angeordnet ist, und jede der beiden Seitenplatten (22) zwei Vertiefungen (22) umfasst, die auf zwei Seiten des Drehzapfens (201) angeordnet sind.

7. Wischermontagestruktur nach Anspruch 6, die ferner eine Schutzabdeckung (40) umfasst, wobei die Schutzabdeckung (40) ein Durchgangsloch (401) umfasst und die Schutzabdeckung (40) mit dem Zubehörsitz (20) verbunden ist, indem der Drehzapfen (201) durch das Durchgangsloch (401) geführt wird.

## Revendications

1. Une structure d'assemblage d'essuie-glace (1) pouvant être reliée à un bras d'entraînement (2), la structure de montage d'essuie-glace (1) comprenant:
un siège de fixation (10) comprenant un siège de coque (11) et plusieurs blocs de pression (12) disposés dans le siège de coque (11) ;
un siège d'accessoire (20) comprenant une plaque de fond (21) et deux plaques latérales (22) s'étendant perpendiculairement à partir de la plaque de fond (21), chacune des deux extrémités de chaque plaque latérale (22) comprenant une pluralité de feuilles en saillie (23) disposées chacune à une extrémité de celle-ci, et dans lequel le siège d'accessoire (20) est positionné dans le siège de fixation (10) en insérant les feuilles en saillie (23) dans le siège de coque (11) pour être pressées à travers les blocs de pression (12) ; et
un jeu de lames (30) comprenant une feuille élastique (31) et au moins une bande de caoutchouc (32), la feuille élastique (31) étant disposée sous la plaque de fond (21) et la bande de caoutchouc (32) étant reliée à la feuille élastique (31) et s'étendant sur un côté du siège d'accessoire (20) ;
dans lequel le siège de coque (11) comprend une cavité de réception (110) disposée en correspondance avec les deux plaques latérales (22) du siège d'accessoire (20), et les blocs de pression (12) sont disposés aux coins de la cavité de réception (110) du siège de coque (11) ;
**caractérisé en ce que** le siège de coque (11) comprend une pluralité de tôles de support (112) disposées sur un fond de la cuvette de réception (110), et **en ce que** deux extrémités de la plaque de fond (21) sont en butée contre les tôles de support (112).

2. La structure d'assemblage d'essuie-glace selon la revendication 1, dans laquelle le siège de coque (11) comprend une pluralité de feuilles de fixation (111) disposées sur une périphérie de l'auge de réception (110), les deux plaques latérales (22) comprennent une pluralité de trous de fixation (221) disposés en correspondance avec les feuilles de fixation (111), et les feuilles de fixation (111) sont en prise avec les trous de fixation (221).

3. La structure d'assemblage d'essuie-glace selon la revendication 1, dans laquelle les lames de support (112) sont disposées séparément en fonction de la position des blocs de presse (12) et les lames en saillie (23) sont respectivement insérées entre les lames de support (112) et les blocs de presse (12).

4. La structure d'assemblage d'essuie-glace selon la revendication 3, dans laquelle le siège de coque (11) comprend une rainure (113) disposée sur deux côtés de chaque tôle de support (112), et chaque tôle en saillie (23) est insérée entre la rainure (113) et le bloc de pression (12).

5. La structure d'assemblage d'essuie-glace selon la revendication 4, dans laquelle une section transversale de la plaque de base (21) est configurée en fonction d'une section transversale de la plaque de support (112), et la section transversale de la plaque de base (21) est une forme en U.

6. La structure d'assemblage d'essuie-glace selon la revendication 1, dans laquelle le siège d'accessoire (20) comprend en outre un pivot (201) disposé entre les deux plaques latérales (22), et chacune des deux plaques latérales (22) comprend deux cavités (22) disposées sur deux côtés du pivot (201).

7. La structure d'assemblage d'essuie-glace selon la revendication 6, comprenant en outre un couvercle de protection (40), dans lequel le couvercle de protection (40) comprend un trou traversant (401) et le couvercle de protection (40) est relié au siège d'accessoire (20) en faisant passer le pivot (201) à travers le trou traversant (401).
